# EUROPÄISCHE PATENTSCHRIFT

(11) **EP 0 540 856 B1**
(45) Veröffentlichungstag und Bekanntmachung des Hinweises auf die Patenterteilung: **22.05.1996**
(21) Anmeldenummer: 92115448.0
(22) Anmeldetag: 10.09.1992
(51) Int. Cl.: H02K 7/06, H02K 7/10, F16H 19/06

(54) **Linearantrieb**
Linear drive
Entrainement linéaire

(30) Priorität: 02.11.1991 DE 4136119
(43) Veröffentlichungstag der Anmeldung: 12.05.1993
(73) Patentinhaber: Daimler-Benz Aerospace Aktiengesellschaft, D-80995 München (DE)
(72) Erfinder: Baginski, Ralf, W-2121 Neetze (DE); Felkai, Roland, W-2800 Bremen 61 (DE)
(74) Vertreter: Hansmann, Dierk, Dipl.-Ing.

(56) Entgegenhaltungen:
- GB-A- 1 479 281
- GB-A- 2 152 180
- US-A- 4 484 485

## Beschreibung

Die Erfindung betrifft einen Linearantrieb, insbesondere zur Verwendung im Bereich der Luft- und Raumfahrt, bestehend aus einem Elektromotor, einem Läufer sowie einer verbindenden Kopplung zwischen Läufer und Elektromotor, bei dem die Kopplung als ein flexibles und umlenkfähiges Verbindungsmittel ausgebildet ist, das den Läufer positioniert und im Bereich seiner dem Elektromotor abgewandten Ausdehnung von mindestens einem Umlenkmittel, das seine Bewegungsrichtung ändert gespannt ist und bei dem das Verbindungsmittel im Bereich seiner dem Elektromotor zugewandten Ausdehnung über ein rotierendes Führungsmittel vom Elektromotor angetrieben ist.

Derartige Antriebe werden verwendet, um ausgehend von einem Motor mit rotierenden Antriebselementen eine lineare Verstellung des Läufers durchführen zu können. Hierzu ist es bekannt, mit Hilfe des Elektromotors eine Spindel anzutreiben, die in den mit einem entsprechenden Gewinde versehenen Läufer eingreift und den Läufer in Richtung einer Längsachse der Spindel positioniert. Bei den bekannten Linearantrieben sind die Elektromotoren häufig im Bereich eines Endes des Linearantriebes angeordnet und verringern hierdurch bei einer vorgegebenen Einbaulänge den verfügbaren Hubbereich. Darüber hinaus stehen die Elektromotoren häufig erheblich seitlich über den längsverschieblichen Läufer hinaus, so daß nicht nur in Richtung der Längsbewegung des Läufers, sondern auch quer zu dieser Richtung ein erhebliches Einbauvolumen bereitgestellt werden muß. Dieses Einbauvolumen kann zwar bei Anwendungen im Bereich von Werkstatt- oder Montagehallen bereitgestellt werden, bei Anwendungen im Bereich der Luft- und Raumfahrt sind die räumlichen Verhältnisse jedoch sehr beschränkt, so daß eine Verwendung der bekannten Linearantriebe mit erheblichen Schwierigkeiten verbunden ist und aufgrund der räumlichen Verhältnisse nur sehr eingeschränkt erfolgen kann.

Aus der DE-38 36 372 A1 ist eine Einrichtung zur Bewegung eines Verbindungsmittels bekannt, das als eine flexible Zugspindel ausgebildet ist. Die Zugspindel weist Gewindegänge auf und ist durch eine Hohlwelle hindurch im Bereich eines Elektromotors geführt. Die Hohlwelle ist in einer Längsrichtung des Elektromotors fixiert und rotationsfähig gelagert. Die Hohlwelle weist einen mit ihr verbundenen Mitnehmer auf, der über ein Kopplungselement, beispielsweise eine geeignet gelagerte Kugel, in den Gewindegang der Spindel eingreift. Bei einer Rotationsbewegung der Hohlwelle und des Mitnehmers wird hierdurch eine Bewegung der Spindel in Längsrichtung des Motors hervorgerufen. Konstruktionsbedingt ragt der Motor mit seinem halben Durchmesser seitlich über das Verbindungsmittel hinaus. Eine kompakte Ausführungsform ist somit aufgrund dieser Konstruktion nur begrenzt realisierbar.

Aus der US-A-4 484 485 ist ein Antriebsmechanismus bekannt, bei dem ein Läufer mit Hilfe eines Riemens oder eines Seiles transportiert wird. Zur Erzeugung der erforderlichen Verstellbewegungen ist ein Elektromotor vorgesehen. Der Elektromotor ist über ein rotierendes Führungsmittel mit dem umlenkfähigen Verbindungsmittel verkoppelt.

In der GB-A-1 479 281 ist ein weiterer Antrieb für einen Läufer bekannt. Der Läufer ist mit zwei Wenderädern versehen. Durch eine Drehbewegung der Wenderäder wird der Läufer entlang einer Führungsschiene positioniert.

Aufgabe der vorliegenden Erfindung ist es daher, einen Linearantrieb der einleitend genannten Art derart zu verbessern, daß das beanspruchte Einbauvolumen reduziert und die Flexibilität bei einer Verwendung erhöht wird.

Diese Aufgabe wird erfindungsgemäß dadurch gelöst, daß der Elektromotor zwischen zwei Schenkeln einer die Umlenkmittel tragenden Führungsschiene innerhalb des Linearantriebes ohne Extraraum angeordnet ist und daß sich der Elektromotor mit seiner Längsachse in Richtung einer Längsachse der Führungsschiene erstreckt.

Durch die Ausbildung der Kopplung als umlenkfähiges Verbindungsmittel ist es möglich, den Elektromotor an einer geeigneten Stelle anzuordnen und die Umlenkmittel derart vorzusehen, daß der Läufer nahezu in beliebigen Bereichen positioniert werden kann. Insbesondere ist es beispielsweise möglich, den Elektromotor zwischen verwendeten Umlenkmitteln anzuordnen und hierdurch eine Gesamtbaulänge für eine Positionierung des Läufers nützen zu können. Darüber hinaus ist es aber auch möglich, mit Hilfe der Umlenkmittel eine Umlenkung über eine oder mehrere Ecken vorzunehmen und hierdurch auch bei beengten räumlichen Verhältnissen eine Führung des Läufers in dafür vorgesehene Bereiche realisieren zu können. Insbesondere ist es auch möglich, eine räumlich getrennte Anordnung des Elektromotors und des Läufers vorzunehmen und eine entsprechende Distanz über das Verbindungsmittel mit nahezu beliebig vorgebbarer Wegführung zu überbrücken.

Eine Reduzierung des Bauvolumens wird dadurch ermöglicht, daß der Elektromotor zwischen zwei Schenkeln der Führungsschiene innerhalb der Lineareinheit ohne Extraraum angeordnet ist.

Eine besonders leichte und einfach umlenkfähige Ausbildung der Kopplung wird dadurch realisiert, daß die Kopplung als ein Seil ausgebildet ist.

Eine preiswert zu fertigende und widerstandsfähige Ausbildung des Führungsmittels wird dadurch bereitgestellt, daß das Führungsmittel als ein Antriebsrad ausgebildet ist.

Zur Ausbildung einer kompakten Bauform sowie zur Durchführung einer weitgehenden Vormontage wird vorgeschlagen, daß mindestens eines der Umlenkmittel im Bereich einer Führungsschiene angeordnet ist.

Eine kompakte Ausführung kann darüber hinaus dadurch realisiert werden, daß vier als Umlenkräder ausgebildete Umlenkmittel vorgesehen sind, die im wesentlichen ein Rechteck aufspannen.

Zur Vermeidung eines Rutschens der Kopplung im Bereich des Führungsmittels und damit zur Vermeidung von Positionierungsungenauigkeiten wird vorgeschlagen, daß die als ein Seil ausgebildete Kopplung im Bereich des als Antriebsrad ausgebildeten Führungsmittels das Antriebsrad mehrfach umschlingt. Das Seil ist fest mit dem Antriebsrad verbunden, wodurch ein Rutschen unmöglich ist.

Eine Positionierung des Läufers auch im Bereich von schwer zugänglichen und mit nur geringen räumlichen Ausdehnungen versehenen Einsatzorten wird dadurch ermöglicht, daß eine Mehrfachumlenkung der Kopplung vorgesehen ist.

Zur definierten Positionierung des Läufers relativ zur Kopplung wird, daß der Läufer fest mit der Kopplung verbunden ist. Eine Auswechselung von Verschleißteilen sowie Änderungen im Bereich der Führung der Kopplung können dadurch erleichtert werden, daß im Bereich des Läufers über mindestens zwei Wenderäder eine Rollenführung für die Kopplung vorgesehen ist.

Das für den Linearantrieb erforderliche Bauvolumen wird weiter dadurch reduziert, daß sich der Elektromotor mit seiner Längsachse in Richtung einer Längsachse der Führungsschiene erstreckt.

In den Zeichnungen ist ein Ausführungsbeispiel der Erfindung schematisch dargestellt. Es zeigen:
- Fig. 1: eine Draufsicht auf einen Linearantrieb, bei dem vier Umlenkrollen im wesentlichen rechteckförmig angeordnet sind und der Elektromotor zwischen Schenkeln eines die Umlenkrollen halternden Trägers angeordnet ist,
- Fig. 2: eine Prinzipdarstellung eines mit einem als Seil ausgebildeten Umlenkmittel fest verbundenen Läufers und
- Fig. 3: eine Prinzipdarstellung eines Läufers, der zwei Umlenkrollen zur Führung eines im wesentlichen schleifenförmig angeordneten seilartigen Umlenkmittels aufweist.

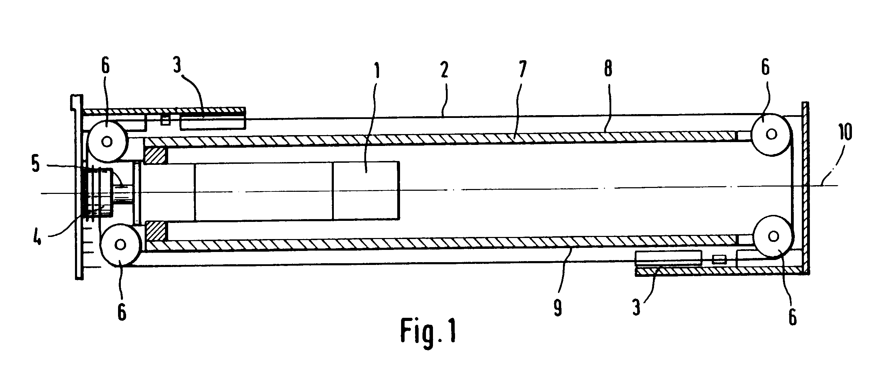

Ein Linearantrieb besteht entsprechend der Darstellung in Figur 1 im wesentlichen aus einem Elektromotor (1), der über eine Kopplung (2) mit einem Läufer (3) verbunden ist. Die Kopplung (2) ist als ein Seil ausgebildet, das mehrfach um ein Antriebsrad (4) des Elektromotors (1) gewickelt und damit verbunden ist. Hierdurch wird auf zuverlässige Weise ein Rutschen des Seiles im Bereich des Antriebsrades (4) vermieden. Das Antriebsrad (4) ist über eine Welle (5) an den Elektromotor (1) angekoppelt.

Zur Führung der Kopplung (2) sind in einem dem Elektromotor (1) abgewandten Bereich Umlenkmittel (6) angeordnet, die beispielsweise als Umlenkrollen ausgebildet sind. Darüber hinaus sind in einem dem Elektromotor (1) zugewandten Bereich weitere Umlenkmittel (6) vorgesehen. Bei der Ausführungsform gemäß Figur 1 spannen die Umlenkmittel (6) im wesentlichen ein Rechteck auf. Die Umlenkmittel (6) sind im Bereich einer Führungsschiene (7) gelagert. Die Führungsschiene (7) weist Schenkel (8,9) auf, zwischen denen der Elektromtor (1) angeordnet ist. Der Elektromotor (1) erstreckt sich hierdurch mit seiner Welle (5) im wesentlichen in Richtung einer Längsachse (10) der Führungsschiene (7).

Statt einer Ausbildung der Kopplung (2) als Seil ist es beispielsweise möglich, Riemen, Zahnriemen oder Ketten zu verwenden. Bei einer derartigen Ausbildung werden die Umlenkmittel (6) sowie das Antriebsrad (4) zweckmäßigerweise mit Verzahnungen ausgerüstet.

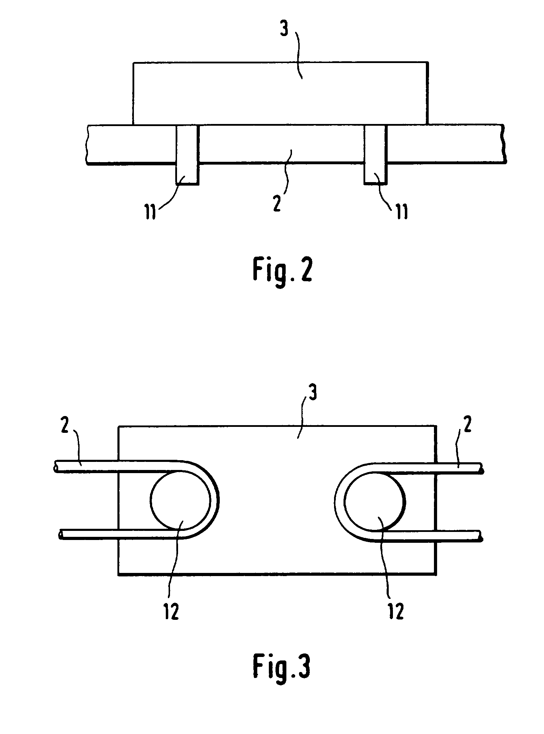

Gemäß der Ausführungsform in Figur 2 ist es möglich, den Läufer (3) über Verbindungselemente (11) fest mit der Kopplung (2) zu verbinden. Entsprechend der Darstellung in Figur 3 ist es aber auch möglich, beispielsweise im Bereich des Läufers (3) Wenderäder (12) anzuordnen, mit deren Hilfe eine im wesentlichen schleifenförmige Führung der Kopplung (2) realisiert wird. Die Wenderäder (12) können beispielsweise mit einer Verzahnung ausgerüstet sein, die im Bereich einer Zahnschiene abrollt. Es ist aber auch möglich, bei einer Ausbildung der Kopplung (2) als Kette oder Zahnriemen die Wenderäder (12) im Bereich ihrer der Kopplung (2) zugewandten Ausdehnung mit geeigneten Verzahnungen zu versehen. Schließlich ist es auch möglich, eine im wesentlichen glattflächige Ausbildung der Wenderäder (12) vorzusehen.

## Patentansprüche

1. Linearantrieb, insbesondere zur Verwendung im Bereich der Luft- und Raumfahrt, bestehend aus einem Elektromotor (1), einem Läufer (3) sowie einer verbindenden Kopplung (2) zwischen Läufer (3) und Elektromotor (1), bei dem die Kopplung (2) als ein flexibles und umlenkfähiges Verbindungsmittel ausgebildet ist, das den Läufer (3) positioniert und im Bereich seiner dem Elektromotor (1) abgewandten Ausdehnung von mindestens einem Umlenkmittel (6), das seine Bewegungsrichtung ändert, gespannt ist und bei dem das Verbindungsmittel im Bereich seiner dem Elektromotor (1) zugewandten Ausdehnung über ein rotierendes Führungsmittel (4) vom Elektromotor (1) angetrieben ist, dadurch gekennzeichnet, daß der Elektromotor (1) zwischen zwei Schenkeln (8,9) einer die Umlenkmittel (6) tragenden Führungsschiene (7) innerhalb des Linearantriebes ohne Extraraum angeordnet ist und daß sich der Elektromotor (1) mit seiner Längsachse in Richtung einer Längsachse (10) der Führungsschiene (7) erstreckt.

2. Linearantrieb nach Anspruch 1, dadurch gekennzeichnet, daß die Kopplung (2) als ein Seil ausgebildet ist.

3. Linearantrieb nach Anspruch 1 oder 2, dadurch gekennzeichnet, daß das Führungsmittel als ein Antriebsrad (4) ausgebildet ist.

4. Linearantrieb nach einem der Ansprüche 1 bis 3, dadurch gekennzeichnet, daß mindestens eines der Umlenkmittel (6) im Bereich der Führungsschiene (7) angeordnet ist.

5. Linearantrieb nach einem der Ansprüche 1 bis 4, dadurch gekennzeichnet, daß vier als Umlenkräder ausgebildete Umlenkmittel (6) vorgesehen sind, die im wesentlichen ein Rechteck aufspannen.

6. Linearantrieb nach einem der Ansprüche 1 bis 5, dadurch gekennzeichnet, daß die als ein Seil ausgebildete Kopplung (2) im Bereich des als Antriebsrad (4) ausgebildeten Führungsmittels das Antriebsrad (4) mehrfach umschlingt und an dem Antriebsrad (4) befestigt ist.

7. Linearantrieb nach einem der Ansprüche 1 bis 6, dadurch gekennzeichnet, daß eine Mehrfachumlenkung zur Vorgabe aufeinanderfolgender Richtungsänderungen der Kopplung (2) vorgesehen ist.

8. Linearantrieb nach einem der Ansprüche 1 bis 7, dadurch gekennzeichnet, daß der Läufer (3) fest mit der Kopplung (2) verbunden ist.

9. Linearantrieb nach einem der Ansprüche 1 bis 7, dadurch gekennzeichnet, daß im Bereich des Läufers (3) über mindestens zwei Wenderäder (12) eine Rollenführung für die Kopplung (2) vorgesehen ist.

## Claims

1. Linear drive, particularly for use in the field of aeronatics and astronautics, consisting of an electric motor (1), a cursor (3) and a connecting coupling (2) between the cursor (3) and the electric motor (1), wherein the coupling (2) is constructed as a flexible and deflectable connecting means which positions the cursor (3) and is tensioned, in the region of its extension which is turned away from the electric motor (1), by at least one deflecting means (6) which changes its direction of movement, and wherein the connecting means is driven, in the region of its extension which is turned towards the electric motor (1), by the said electric motor (1) via a rotating guide means (4), characterized in that the electric motor (1) is disposed, inside the linear drive without extra space, between two side pieces (8, 9) of a guide bar (7) carrying the deflecting means (6), and that the electric motor (1) extends with its longitudinal axis in the direction of a longitudinal axis (10) of the guide bar (7).

2. Linear drive according to claim 1, characterized in that the coupling (2) is constructed as a cable.

3. Linear drive according to claim 1 or 2, characterized in that the guide means is constructed as a drive wheel (4).

4. Linear drive according to one of claims 1 to 3, characterized in that at least one of the deflecting means (6) is disposed in the region of the guide bar (7).

5. Linear drive according to one of claims 1 to 4, characterized in that four deflecting means (6) constructed as deflecting wheels are provided, which essentially span a rectangle.

6. Linear drive according to one of claims 1 to 5, characterized in that, in the region of the guide means constructed as a drive wheel (4), the coupling (2) constructed as a cable winds around the drive wheel (4) a number of times and is fastened thereto.

7. Linear drive according to one of claims 1 to 6, characterized in that provision is made for multiple deflection for the purpose of predetermining successive changes in direction of the coupling (2).

8. Linear drive according to one of claims 1 to 7, characterized in that the cursor (3) is fixedly connected to the coupling (2).

9. Linear drive according to one of claims 1 to 7, characterized in that a roller guide for the coupling (2) is provided, in the region of the cursor (3), via at least two turning wheels (12).

## Revendications

1. Entraînement linéaire utilisé en particulier dans le domaine de l'aéronautique et de l'astronautique, composé d'un éléctromoteur (1), d'un chariot mobile (3) ainsi que d'un élément d'accouplement (2) disposé entre le chariot mobile (3) et l'électromoteur (1), ledit élément d'accouplement (2) étant conçu comme un moyen de liaison flexible et pouvant changer de direction, ledit moyen de liaison positionnant le chariot mobile (3) et étant tendu dans la partie opposée à l'électromoteur (1) par au moins un moyen de renvoi (6) qui modifie sa direction de déplacement, de même qu'il est entraîné par l'intermédiaire d'un élément d'entraînement rotatif (4) de l'électromoteur (1) dans son prolongement tourné vers l'électromoteur (1), caractérisé en ce que l'électromoteur (1) est disposé entre les deux côtés latéraux (8, 9) d'un rail de guidage (7) supportant les moyens de renvoi (6) à l'intérieur de l'entraînement linéaire sans laisser d'espace entre cet électromoteur et les deux côtés latéraux et en ce que l'axe longitudinal de l'électromoteur (1) s'étend dans la direction d'un axe longitudinal (10) du rail de guidage (7).

2. Entraînement linéaire selon la revendication 1, caractérisé en ce que l'élément d'accouplement (2) est conçu comme un câble.

3. Entraînement linéaire selon l'une ou l'autre des revendications 1 et 2, caractérisé en ce que l'élément d'entraînement est conçu comme un tambour de commande (4).

4. Entraînement linéaire selon l'une ou l'autre des revendications 1 à 3, caractérisé en ce que au moins un des moyens de renvoi (6) est disposé dans la zone du rail de guidage (7).

5. Entraînement linéaire selon l'une ou l'autre des revendications 1 à 4, caractérisé en ce que sont prévus quatre moyens de renvoi (6) conçus comme des poulies de renvoi et formant en substance un rectangle.

6. Entraînement linéaire selon l'une ou l'autre des revendications 1 à 5, caractérisé en ce que l'élément d'accouplement (2) conçu comme un câble s'enroule plusieurs fois autour du tambour de commande (4) dans la zone de l'élément d'entraînement conçu comme un tambour de commande (4).

7. Entraînement linéaire selon l'une ou l'autre des revendications 1 à 6, caractérisé en ce qu'il est prévu des renvois multiples destinés à assurer les changements de direction successifs de l'élément d'accouplement (2).

8. Entraînement linéaire selon l'une ou l'autre des revendications 1 à 7, caractérisé en ce que le chariot mobile (3) est relié fixement à l'élément d'accouplement (2).

9. Entraînement linéaire selon l'une ou l'autre des revendications 1 à 8, caractérisé en ce qu'il est prévu dans la zone du chariot mobile (3) un guidage à rouleaux pour l'élément d'accouplement constitué par au moins deux poulies (12).
